(19) Europäisches Patentamt
European Patent Office
Office européen des brevets

(11) EP 2 315 311 A1

(12) EUROPEAN PATENT APPLICATION

(43) Date of publication:
27.04.2011 Bulletin 2011/17

(51) Int Cl.:
$H01Q\ 21/06$ (2006.01)    $H01Q\ 21/20$ (2006.01)
$H01Q\ 21/22$ (2006.01)

(21) Application number: 09173986.2

(22) Date of filing: 23.10.2009

(84) Designated Contracting States:
AT BE BG CH CY CZ DE DK EE ES FI FR GB GR HR HU IE IS IT LI LT LU LV MC MK MT NL NO PL PT RO SE SI SK SM TR

(71) Applicants:
• The European Union,
represented by the European Commission
1049 Brussels (BE)
• Delft University of Technology
2600 AA  Delft (NL)
• Satimo
91953 Courtaboeuf (FR)

(72) Inventors:
• Fortuny-Guasch, Joaquim
21020 Taino (IT)

• Martinez, Alberto
08014 Barcelona (ES)
• Yarovoy, Alexander
2614 LR Delft (NL)
• Zhuge, Xiaodong
2611 GP Delft (NL)
• Lerat, Jean-Marie
91160 Longjumeau (FR)
• Duchesne, Luc
91470 Angervilliers (FR)

(74) Representative: Office Freylinger
P.O. Box 48
8001 Strassen (LU)

(54) **An ultra-wideband radar imaging system using a two-dimensional multiple-input multiple output (MIMO) transducer array**

(57)    A radar transducer array (12) for an ultra-wideband imaging radar system (10) operating at a reference wavelength $\lambda_c$ comprises transmission antenna elements (14) or reception antenna elements and reception antenna elements (16), which are located at specific locations of the array plane in such a way that high image quality is achieved with a minimum number of antenna elements (14, 16), resulting in less complex hardware as well as significantly reduced computational effort.

**Fig. 2**

EP 2 315 311 A1

**Description**

**Technical Field**

The present invention generally relates to the field of radar imaging, more particularly to a radar transducer array for an imaging radar system.

**Background Art**

Radar transducer arrays with a plurality of transmission and reception antenna elements are well known in radar imaging. Document US 2008/0143587 A1 discloses a multiple-input multiple-output (MIMO) radar system comprising a transmitter array of transmission antenna elements for transmitting RF signals into the direction of a target and a receiver array of reception antenna elements for receiving backscattered RF signals from the target. The individual transmission or reception antenna elements are spaced apart by a distance $\Delta d > R \cdot \lambda_c / \Delta x$, where R is the slant distance at which detection is to be made, $\lambda_c$ is the carrier wavelength and $\Delta x$ is a target dimension.

MIMO radars use multiple separate transmission (TX) and reception (RX) antenna elements that are spatially distributed. The signals transmitted by the different TX antenna elements are backscattered by the target and received independently of one another by the different RX antenna elements. The target is thereby "illuminated" and "viewed" from multiple combinations of directions. As explained in paper "UWB MIMO Radar Arrays for Small Area Surveillance Applications", by A. Martinez-Vazquez and J. Fortuny-Guasch, The Second European Conference on Antennas and Propagation, 11-16 November 2007 (EuCAP 2007), small changes in the viewing angle cause large fluctuations in radar cross section. Appropriately combining the individual received signals leads to better information on the target than traditional beamforming. The paper also discloses a sparse radar transducer array with a single TX antenna element and a plurality of RX antenna elements distributed in an ellipse around the TX antenna element, as well as a sparse radar transducer array with TX and RX antenna elements distributed in alternance in an elliptical configuration. The paper shows that narrow beamwidth and good sidelobe suppression can be achieved with sparse arrays. Nevertheless, the computational effort for computing images using the presented arrays is still significant and leaves room for improvement.

**Technical problem**

It is an object of the present invention to provide radar transducer arrays with which good angular resolution and sidelobe suppression can be achieved while the computational effort associated with image computation is reduced with respect to known transducer geometries. This object is achieved by radar transducer arrays as claimed in claims 1 and 2. Preferred embodiments of the invention are detailed in the dependent claims.

**General Description of the Invention**

A radar transducer array for an ultra-wideband (UWB) imaging radar system operating at a reference wavelength $\lambda_c$ comprises first antenna elements (either transmission antenna elements or reception antenna elements) and second antenna elements (the others of the transmission antenna elements and the reception antenna elements). In the context of the present, a radar system is considered ultra-wideband if its operational bandwidth is at least 50 MHz or amounts to at least 20% of the arithmetic center frequency. According to the invention, the first and second antenna elements are located at specific locations of the array plane. In the following, these array positions are expressed in units of a reference wavelength $\lambda_c$ selected in the operation band of the radar (i.e. the indicated array positions have to be multiplied by $\lambda_c$ in order to express the positions in the same units as the reference wavelength, e.g. meters, centimeters, etc.), with reference to an orthonormal coordinate system centered on the radar transducer array. The tolerance in the positions is at most an eighth of the reference wavelength, i.e. each antenna elements is located within a circle with a radius of at most $0.125 \lambda_c$ centered on the respective nominal position. It should be noted that increasing or decreasing $\lambda_c$ results in uniformly scaling (i.e. a magnification or a reduction, respectively) of the radar transducer array. Preferably, $\lambda_c$ corresponds to the center wavelength of the imaging radar system. However, $\lambda_c$ may also be offset from the center wavelength. The reference wavelength is preferably chosen corresponding to a frequency (via $\lambda_c = c/f$, where c designate the speed of light and f the frequency) in the range from 200 MHz to 12 GHz.

In a first embodiment of the invention, the first antenna elements are located at array positions (2.5000; 2.1812), (2.1812; -2.5000), (-2.5000; -2.1812) and (-2.1812; 2.5000) while the second antenna elements are located at array positions (0,3375; 1.6625), (2.5000; 0,3375), (1.0000; -2,5000), (1.6625; -1.0000), (-0,3375; -1.6625), (-2.5000; -0,3375), (-1.0000; 2,5000) and (-1.6625; 1.0000).

In a second embodiment of the invention, the first antenna elements are located at array positions (2.5000;

0.7500), (0.7500; -2.5000), (-2.5000; -0.7500) and (-0.7500; 2.5000) while the second antenna elements are located at array positions (0,2692; 2.1442), (1.3375; 2.5000), (2.1442; -0.2692), (2.5000; -1.3375), (-0,2692; -2.1442), (-1.3375; -2.5000), (-2.1442; 0.2692) and (-2.5000; 1.3375).

As can readily be recognized, the set of nominal array positions is point-symmetric. In the context of the present, the coordinate system is considered centered on the radar transducer array if the origin of the coordinate system coincides with the point of symmetry of the set of nominal array positions.

When implementing the indicated 4x8 topologies, one will note and appreciate that they allow achieving unprecedented image quality (good sidelobe suppression and little or no aliases) in a system with comparably low complexity. To achieve good sidelobe suppression, the first and second array elements are preferably located at the array positions with a tolerance of at most a sixteenth (6.25%), more preferably even less, of the reference wavelength.

The first antenna elements are preferably transmission antenna elements while the second antenna elements are reception antenna elements. Alternatively, the first antenna elements may be reception antenna elements while the second antenna elements are transmission antenna elements.

An aspect of the present invention concerns an imaging radar system comprising a radar transducer array as defined hereinbefore. Such imaging radar system preferably comprises a signal generation unit operatively connected to the transmission antenna elements and a signal reception unit operatively connected to the reception antenna elements, an image computation unit operatively connected to the signal reception unit and a system control unit operatively connected to the signal generation unit, the signal reception unit and the image computation unit to coordinate operation thereof.

According to a preferred embodiment of the imaging radar system, the signal generation unit comprises an ultra-wideband signal generator and a switching circuit, the switching circuit being configured to alternately switch the signal generator to the transmission antenna elements under control of the system control unit. Similarly, the signal reception unit may comprise an ultra-wideband signal receiver and a switching circuit, the switching circuit of the signal reception unit being configured to alternately switch the signal receiver to the reception antenna elements under a control of the system control unit. The switching circuits are preferably controlled by the system control unit, in such a way that at a given point in time, one of the transmission antenna elements and one of the reception antenna elements are active and that the control unit switches through the different combinations (i.e. pairs of one transmission and one reception antenna) when a radar image is acquired. As an alternative to such time-multiplexed operation, the signal transmission unit could comprise modulators for modulating the signals coupled to the different transmission antenna elements with mutually orthogonal codes or waveforms (CDMA or OFDMA). In this case, the signal reception unit would comprise means for separating the backscattered signals (e.g. code-matched filters) according to the code or waveform they carry.

The image computation unit is preferably configured to compute a radar image from signal contributions obtained for various (more preferably, all possible) pairs of a transmission antenna element and a reception antenna element.

Advantageously, the imaging radar system comprises a display unit, such as e.g. a screen, a computer monitor or the like, operatively connected to the image computation unit.

Brief Description of the Drawings

Further details and advantages of the present invention will be apparent from the following detailed description of not limiting embodiments with reference to the attached drawings, wherein:

Fig. 1 is a block schematic diagram of an imaging radar system;

Fig. 2 is a diagram representing the topology of a radar transducer array according to a first embodiment of the invention;

Fig. 3 is a diagram representing the topology of a radar transducer array according to a second embodiment of the invention;

Fig. 4 is a set of graphs representing the near-field array pattern of the topology of Fig. 2 obtained with a point-like target located at 20 $\lambda_c$ range distance;

Fig. 5 is a set of graphs representing the far-field array pattern of the topology of Fig. 2 obtained with a point-like target located at 85 $\lambda_c$ range distance;

Fig. 6 is a set of graphs representing the near-field array pattern of the topology of Fig. 3 obtained with a point-like target located at 20 $\lambda_c$ range distance;

Fig. 7     is a set of graphs representing the far-field array pattern of the topology of Fig. 3 obtained with a point-like target located at 85 $\lambda_c$ range distance;

Fig. 8     is a graph representing a horizontal cut through the far-field array pattern of the transducer array of Fig. 2 for different positioning tolerances of the antenna elements;

Fig. 9     s a graph representing a vertical cut through the far-field array pattern of the transducer array of Fig. 2 for different positioning tolerances of the antenna elements;

Fig. 10    is a diagram representing an equidistant 15x15 radar transducer array as a comparative example;

Fig. 11    is a set of graphs representing the near-field array pattern of the 15x15 transducer array of Fig. 10 with a point-like target (point scatterer) being located at 20 $\lambda_c$ range distance;

Fig. 12    is a set of graphs representing the far-field array pattern of the 15x15 transducer array of Fig. 10 with the point-like target located at 85 $\lambda_c$ range distance;

Fig. 13    is a graph illustrating the influence of scaling the radar transducer array on the horizontal cut of the far-field pattern of an imaging radar system using the topology of Fig. 2;

Fig. 14    is a graph illustrating the influence of scaling the radar transducer array on the vertical cut of the far-field pattern of an imaging radar system using the topology of Fig. 2.

**Description of Prefered Embodiments**

An ultra-wideband (UWB) imaging system with two-dimensional multiple input multiple output (MIMO) transducer array and digital beamforming is configured to achieve both high resolution and low grating/sidelobe level along two principle imaging planes. By utilizing the MIMO array concept, the number of antenna elements is reduced in comparison with conventional array topologies, which minimizes both weight and complexity of the imaging system. The array topology is carefully arranged to achieve optimal performance within two orthogonal planes (combination of the lowest level of sidelobes by a given width of the main lobe, which gives the sharpest image for centrally positioned objects). The transducer array comprises four transmit and eight receive antennas spatially distributed within a two-dimensional plane. Combining with digital beamforming, such device has the potential to achieve real-time imaging (display refresh rate of 10-12 radar images per second) with a single channel transmitter and receiver. The suggested 4 times 8 topology provides unprecedented image quality with regard to imaging radar systems having comparable complexity.

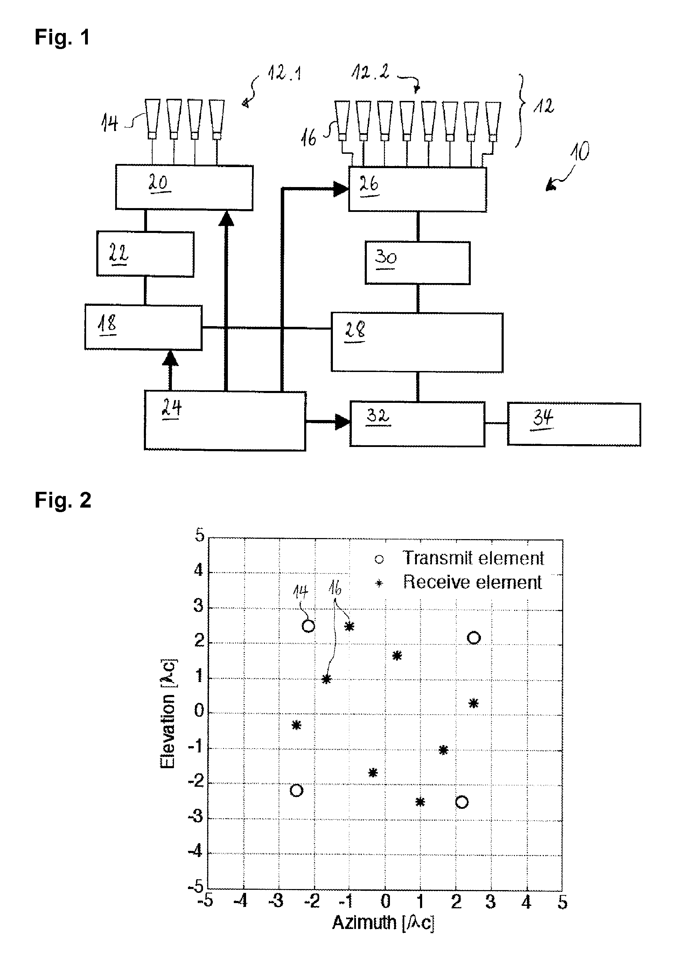

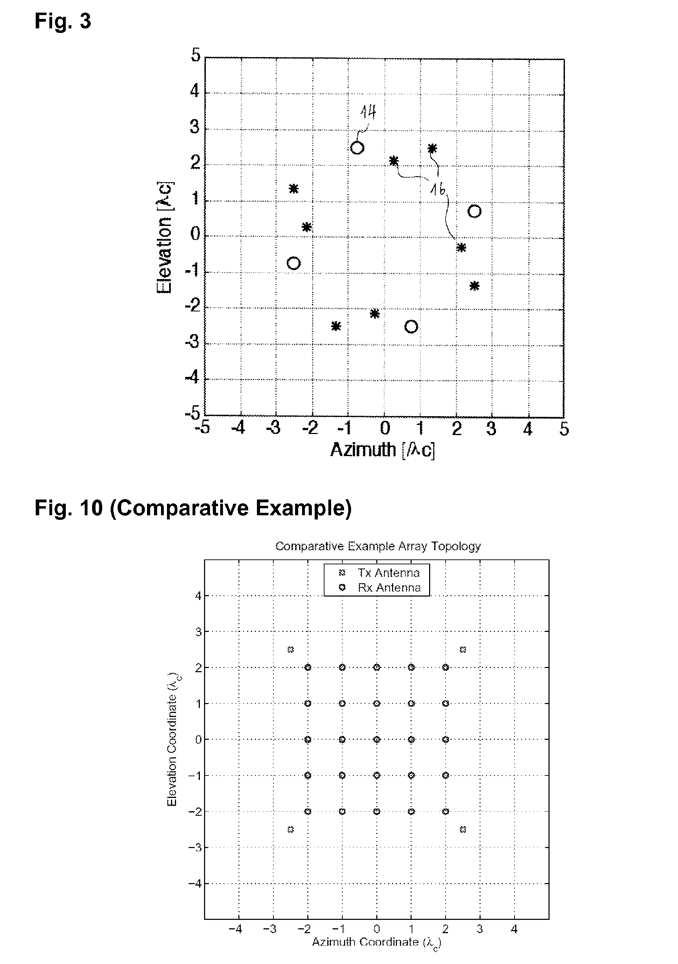

Figure 1 illustrates a preferred embodiment of an UWB imaging radar system 10 in accordance with the invention. The system 10 comprises an array 12 of wideband transducers (subdivided for clarity of the drawing into separate arrays 12.1 and 12.2 of transmission antenna elements 14 and reception antenna elements 16, respectively) and supporting electronics. The transmission and reception antenna elements 14, 16 are provided as microwave transducers that convert electrical signals to electromagnetic waves and convert electromagnetic waves back to radiofrequency electrical signals, respectively. The transducer array topology is that of a highly sparse multiple transmit multiple receive array as illustrated in Figs. 2 and 3. The transmission antenna elements 14 are sequentially excited by a UWB signal generator 18 through a transmit switch circuit 20, which alternately connects the antenna elements 14 to the UWB signal generator 18 via a power amplifier 22. The switching is controlled and synchronized by a system control unit 24. When the backscattered electromagnetic signals arrive at the reception antenna elements 16, the receive switch circuit 26 alternately passes the electric RF signals output by each reception antenna element 16 to a UWB receiver 28 (comprising a demodulator and an A/D converter) through a low-noise amplifier 30. The UWB receiver 28 transposes the incoming radio frequency analog signals to baseband and further converts them into digital signals. The 32 (4x8) digital signals sequentially received for the different transmit/receive pairs of one transmission and one reception antenna element, respectively, are fed into a digital beamforming unit 32 (also referred to as image computation unit), which assigns and weights the signal contributions from the individual pairs to each sampled pixel within the current image, buffers the image, and then accumulates the values for each pixel until all the transmit/receive pairs within the MIMO array have been switched through. The resulting image is fed into a display unit 34, and refreshed in real time.

Two radar transducer array topologies achieving the lowest side/grating lobe level in azimuth and elevation planes without loss of angular resolution are now further described with reference to Figs. 2 and 3. Both topologies comprise four transmission antenna elements 14 and eight reception antenna elements 16 spatially distributed on a two-dimensional plane. No further antenna elements are provided in the transducer array. The antenna element coordinates corresponding to the topology of Fig. 2, normalized to the wavelength at the center frequency, are given in

Table 1:

| Antenna element | Azimuth coordinate [/$\lambda_c$] | Elevation coordinate [/$\lambda_c$] |
|---|---|---|
| TX I | 2.5000 | 2.1812 |
| TX II | 2.1812 | -2.5000 |
| TX III | -2.5000 | -2.1812 |
| TX IV | -2.1812 | 2.5000 |
| RX I | 0.3375 | 1.6625 |
| RX II | 2.5000 | 0.3375 |
| RX III | 1.0000 | -2.5000 |
| RX IV | 1.6625 | -1.0000 |

Table 1 : Antenna element coordinates for the transducer array of Fig. 2

| RX V | -2.5000 | -0.3375 |
|---|---|---|
| RX VI | -0.3375 | -1.6625 |
| RX VII | -1.6625 | 1.0000 |
| RX VIII | -1.0000 | 2.5000 |

The antenna element coordinates corresponding to the topology of Fig. 3, normalized to wavelength at the center frequency, are given in Table 2:

Table 2 : Antenna element coordinates for the transducer array of Fig. 3

| Antenna element | Azimuth coordinate [/$\lambda_c$] | Elevation coordinate [/$\lambda_c$] |
|---|---|---|
| TX I | 2.5000 | 0.7500 |
| TX II | 0.7500 | -2.5000 |
| TX III | -2.5000 | -0.7500 |
| TX IV | -0.7500 | 2.5000 |
| RX I | 0.2692 | 2.1442 |
| RX II | 1.3375 | 2.5000 |
| RX III | 2.1442 | -0.2692 |
| RX IV | 2.5000 | -1.3375 |
| RX V | -0.2692 | -2.1442 |
| RX VI | -1.3375 | -2.5000 |
| RX VII | -2.1442 | 0.2692 |
| RX VIII | -2.5000 | 1.3375 |

The antenna elements 14, 16 are arranged in such a way as to reduce element redundancy and shadowing in the two principle imaging planes (azimuth and elevation planes).

The digital beamforming unit 32 preferably performs digital beamforming using MIMO time-domain back-propagation and/or MIMO Kirchhoff migration algorithms. With a view to the non-uniform distribution of the antenna elements 14, 16, the algorithms are advantageously implemented in time-domain for higher computation efficiency. Nevertheless, the proposed imaging system is not limited to time-domain impulse systems. The use of the these two algorithms with any frequency-domain radar systems, such as frequency modulation continuous wave (FMCW) radar system, or stepped frequency continuous wave (SFCW) radar system would simply require an additional step involving Fast Fourier Transform (FFT) before the image synthesis in the time domain.

In both of the above-mentioned algorithms, image computation is achieved through coherent accumulation of the signal contributions from different transmit/receive pairs. Let $U_{mn}[t]$ be the received digitalized signal from reception antenna element n located at $\mathbf{r}_{Rx-n}$ when transmission antenna element m at position $\mathbf{r}_{Tx-n}$ is transmitting. According to the MIMO back-propagation algorithm, the radar reflectivity at an image point $\mathbf{r}$ (a vector in Euclidean space, $\mathbf{r}=[x, y, z]$) may be calculated as:

$$I_{BP}(\mathbf{r}) = \sum_{m=0}^{N_{Tx}-1} \sum_{n=0}^{N_{Rx}-1} u_{mn}\left(t = \left[(R_{Tx\_m,r} + R_{Rx\_n,r})/c\right]\right) \qquad \text{(Eqn. 1)}$$

where $R_{Tx-m,r}$ is the distance from transmission antenna element m to the image point r, $R_{Tx-n,r}$ is the distance from reception antenna element n to the image point r, c is the speed of light, $N_{Tx}$ is the number of transmission antenna elements 14 numbered from 0 to $N_{Tx}-1$ and $N_{Rx}$ is the number of reception antenna elements 16 numbered from 0 to $N_{Rx}-1$.

The reflectivity at position r using the formula of MIMO Kirchhoff migration may be computed as:

$$I_{KIR}(\mathbf{r}) = \sum_{m=0}^{N_{Tx}-1} \sum_{n=0}^{N_{Rx}-1} (w_{Tx\_m,r} + w_{Rx\_n,r}) \cdot u'_{mn}\left(t = \left[(R_{Tx\_m,r} + R_{Rx\_n,r})/c\right]\right) \qquad \text{(Eqn. 2)}$$

where $u'_{mn}[t]$ represents the first derivative of $U_{mn}[t]$, $W_{Tx-m,r}$ and $W_{Rx\_n,r}$ are weighting functions for the transmission and reception antenna elements, respectively, expressed as:

$$w_{Tx\_m,r} = \left|r_{Tx\_m,r}\right| / R_{Tx\_m,r} \qquad \text{(Eqn. 3)}$$

$$w_{Rx\_n,r} = \left|r_{Rx\_n,r}\right| / R_{Rx\_n,r} \, . \qquad \text{(Eqn. 4)}$$

$|r_{Tx\_m,r}|$ and $|r_{Rx\_n,r}|$ are the distances between the image point and the transmission and reception antenna element along the normal direction of the aperture plane, respectively. Both weights depend on antenna element position and image point position. As the signals associated with each transmit/receive pair come into the processor sequentially, the image associated with each pair is first synthesized, weighted, and then added to a buffered image. Once the loop through all the transmit/receive pairs is completed, the buffered image is fed to the display unit. The loop is operated at a repetition rate of preferably at least 10 Hz.

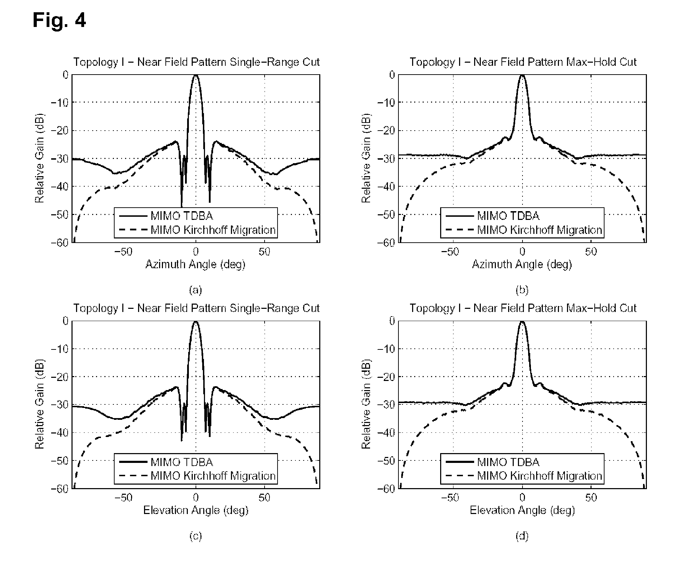

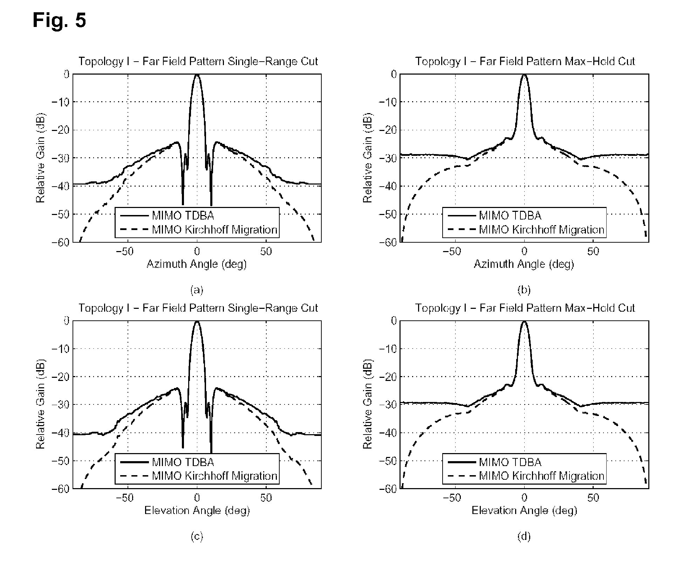

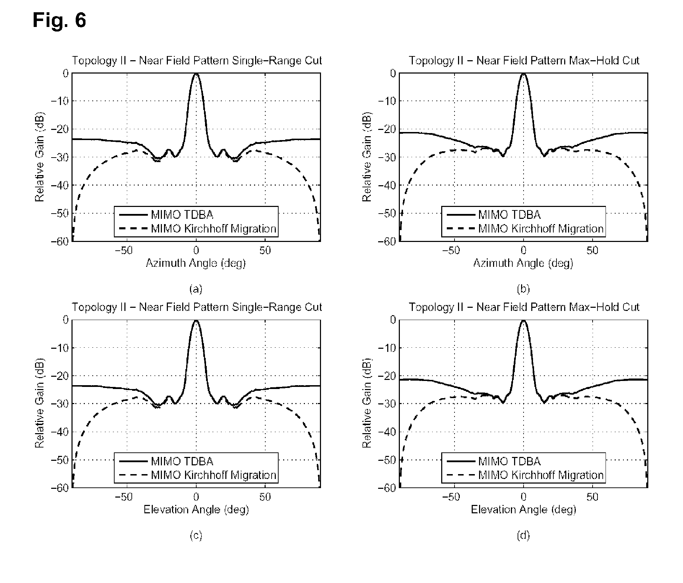

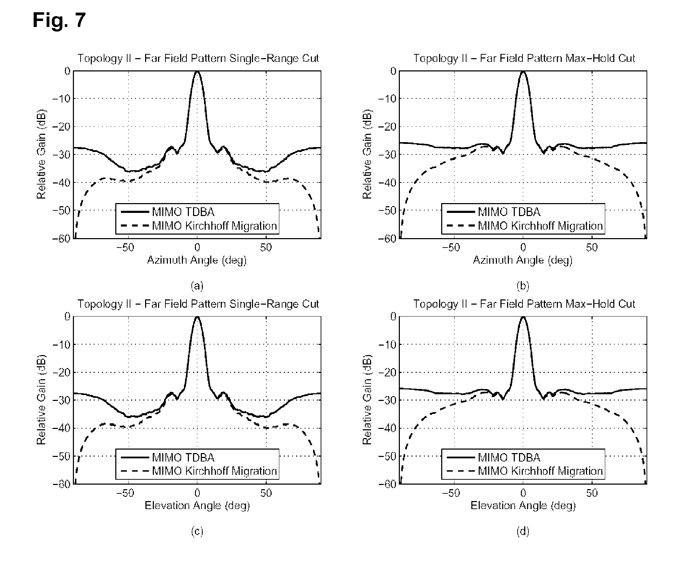

Figs. 4 to 7 show array patterns of the transducer arrays of Figs. 2 and 3 in near-field and far-field obtained using MIMO backpropagation algorithm and MIMO Kirchhoff migration. These patterns are obtained with 120% fractional bandwidth. More specifically, Fig. 4 shows the near-field array pattern of the topology of Fig. 2 obtained with a point-like target located at 20 $\lambda_c$ range distance: (a) is a single range cut within the azimuth plane, (b) is a maximum-hold range cut within the azimuth plane, (c) is a single range cut within the elevation plane and (d) is an maximum-hold range cut within the elevation plane. A "maximum-hold range cut" is obtained by plotting the maximum reflectivity value for all range distances in the image: of all values, only the highest one is selected and shown. Fig. 5 shows the far-field array pattern of the topology of Fig. 2 obtained with a point-like target located at 85 $\lambda_c$ range distance: (a) is a single range cut within the azimuth plane, (b) is an maximum-hold range cut within the azimuth plane, (c) is a single range cut within the elevation plane and (d) is an maximum-hold range cut within the elevation plane. Fig. 6 shows the near-field array pattern of the topology of Fig. 3 obtained with a point-like target located at 20 $\lambda_c$ range distance: (a) is a single range cut within the azimuth plane, (b) is an maximum-hold range cut within the azimuth plane, (c) is a single range cut within the elevation plane and (d) is an maximum-hold range cut within the elevation plane. Fig. 7 shows the far-field array pattern of the topology of Fig. 3 obtained with a point-like target located at 85 $\lambda_c$ range distance: (a) is a single range cut within the azimuth plane, (b) is an maximum-hold range cut within the azimuth plane, (c) is a single range cut within the elevation plane and (d) is an maximum-hold range cut within the elevation plane.

An imaging radar system using the topology of Fig. 2 and MIMO Kirchhoff migration achieves an angular resolution of 4.9 degrees while maintaining an average sidelobe level of -16.5 dB. An imaging radar system using the topology of Fig. 3 and MIMO Kirchhoff migration achieves an angular resolution of 5.5 degrees while maintaining an average sidelobe level of -18.2 dB. Both proposed array topologies present essentially the same performance in azimuth and elevation planes, which may be important for practical applications.

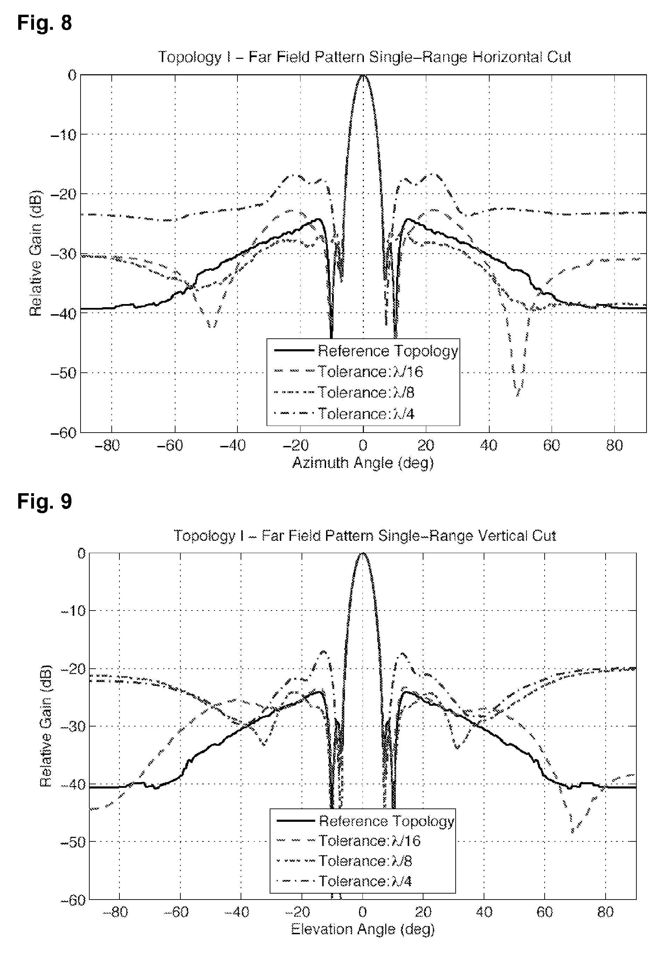

Figs. 8 and 9 illustrate that the performance of a transducer array according to the invention depends on the positioning accuracy of the individual transmission and/or reception antenna elements. Fig. 8 shows a horizontal, Fig. 9 a vertical cut through the far-field array pattern of the transducer array of Fig. 2. The far-field array pattern obtained with the antenna elements positioned at the exact locations of table 1 (reference topology) is shown as a solid line. If the tolerance in the positions of the antenna elements is increased (dashed line: up to $\lambda_c/16$; dotted line: up to $\lambda_c/8$; dash-dotted line: up to $\lambda_c/4$), the amplitude of the sidelobes significantly increases.

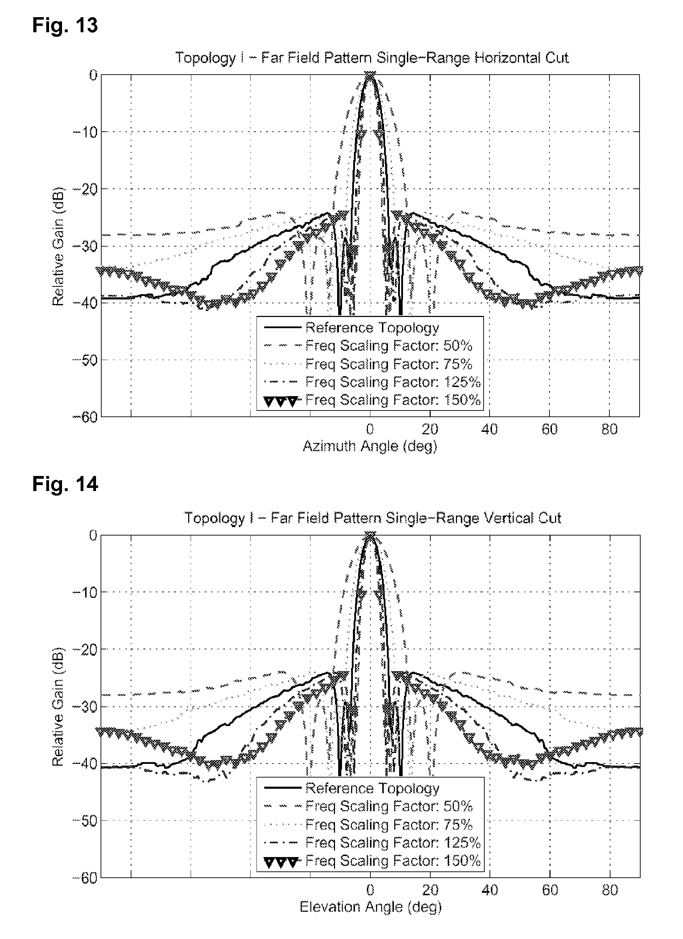

Figs. 13 and 14 illustrate the influence of scaling the radar transducer array on imaging performance. The coordinates in table 1 are expressed in units of wavelength at the center frequency, i.e. in units of the center wavelength of the system. Figs. 13 and 14 show the horizontal and vertical far-field patterns if the center wavelength and the relative bandwidth of the radar system are varied (using the scaling factors indicated in the legend) but the radar transducer array remains unchanged. The figures show that the sidelobe levels do not significantly increase in case of a reference wavelength that is offset from the center wavelength of the radar system.

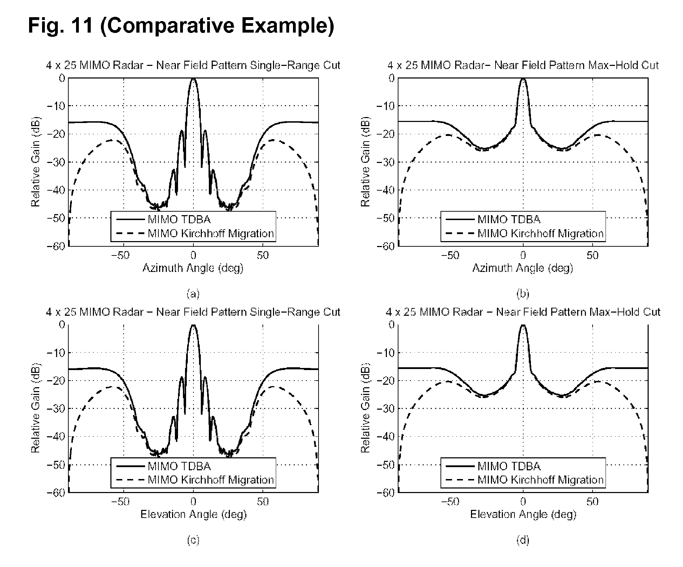

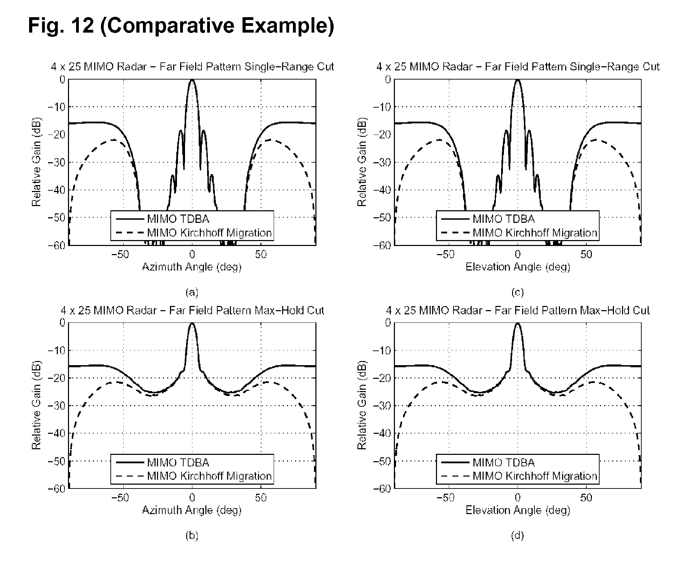

To achieve the same performance using a uniform two-dimensional array with transmission/reception antenna element pairs, the number of antenna elements required would be much greater than in the topologies of Figs. 2 and 3. Fig. 10 shows a radar transducer array with 4 Tx and 25 Rx antennas used for computing the comparative array patterns of Figs. 11 and 12. Fig. 11 shows the near-field array pattern of the transducer array of Fig. 10 with a point-like target being located at 20 $\lambda_c$ range distance: (a) is a single range cut within the azimuth plane, (b) is an maximum-hold range cut within the azimuth plane, (c) is a single range cut within the elevation plane, (d) is an maximum-hold range cut within the elevation plane. Fig. 12 shows the far-field array pattern the transducer array of Fig. 10 with the target located at 85 $\lambda_c$ range distance: (a) is a single range cut within the azimuth plane, (b) is an maximum-hold range cut within the azimuth plane, (c) is a single range cut within the elevation plane and (d) is an maximum-hold range cut within the elevation plane. The comparative example shows that similar angular resolution and sidelobe suppression may be achieved using a conventional array geometry only with a significantly higher number of antenna elements. The present invention thus provides the benefits of less complex and costly hardware as well as significantly reduced computational effort while preserving image quality.

**Reference Number List**

| | |
|---|---|
| 10 | UWB imaging radar system |
| 12 | transducer array |
| 12.1 | transmission antenna array |
| 12.2 | reception antenna array |
| 14 | transmission antenna element |
| 16 | reception antenna elements |
| 18 | UWB signal generator |
| 20 | transmit switch circuit |
| 22 | power amplifier |
| 24 | system control unit |
| 26 | receive switch circuit |
| 28 | UWB receiver |
| 30 | low-noise amplifier |
| 32 | digital beamforming unit |
| 34 | display unit |

**Claims**

1. A radar transducer array (12) for an ultra-wideband imaging radar system (10) configured to operate at a reference wavelength, said radar transducer array (12) comprising first antenna elements and second antenna elements, said first antenna elements being altogether either transmission antenna elements (14) or reception antenna elements (16), said second antenna elements being altogether the others of said transmission antenna elements (14) and said reception antenna elements (16), **characterized in that**
said first antenna elements are located, with a tolerance of at most an eighth of said reference wavelength, at array positions (2.5000; 2.1812), (2.1812; -2.5000), (-2.5000; -2.1812) and (-2.1812; 2.5000), respectively, and said second antenna elements are located, with a tolerance of at most an eighth of said reference wavelength, at array positions (0,3375; 1.6625), (2.5000; 0,3375), (1.0000; -2,5000), (1.6625; -1.0000), (-0,3375; -1.6625), (-2.5000; -0,3375), (-1.0000; 2,5000) and (-1.6625; 1.0000), respectively, said array positions being expressed herein in units of said reference wavelength, with respect to an orthonormal coordinate system centered on said radar transducer array.

2. A radar transducer array (12) for an ultra-wideband imaging radar system (10) configured to operate at a reference wavelength, said radar transducer array (12) comprising first antenna elements and second antenna elements, said first antenna elements being altogether either transmission antenna elements (14) or reception antenna elements (16), said second antenna elements being altogether the others of said transmission antenna elements (14) and said reception antenna elements (16), **characterized in that**
said first antenna elements are located, with a tolerance of at most an eighth of said reference wavelength, at array positions (2.5000; 0.7500), (0.7500; -2.5000), (-2.5000; -0.7500) and (-0.7500; 2.5000) and said second antenna elements are located, with a tolerance of at most an eighth of said reference wavelength, at array positions (0,2692; 2.1442), (1.3375; 2.5000), (2.1442; -0.2692), (2.5000; -1.3375), (-0,2692; -2.1442), (-1.3375; -2.5000), (-2.1442; 0.2692) and (-2.5000; 1.3375) said array positions being expressed herein in units of said reference wavelength, with reference to an orthonormal coordinate system centered on said radar transducer array.

3. The radar transducer array (12) as claimed in claim 1 or 2, wherein said first and second array elements are located at said array positions with a tolerance of at most a sixteenth of said reference wavelength.

4. The radar transducer array (12) as claimed in any one of claims 1 to 3, wherein said first antenna elements are transmission antenna elements and said second antenna elements are reception antenna elements.

5. The radar transducer array (12) as claimed in any one of claims 1 to 3, wherein said first antenna elements are reception antenna elements and said second antenna elements are transmission antenna elements.

6. The radar transducer array (12) as claimed in any one of claims 1 to 5, wherein said reference wavelength is selected corresponding to a frequency in the range from 200 MHz to 12 GHz.

7. The radar transducer array (12) as claimed in any one of claims 1 to 6, wherein said coordinate system comprises a horizontal and a vertical axis with respect to which said array positions are expressed.

8. Imaging radar system (10) comprising a radar transducer array (12) as claimed in any one of claims 1 to 7.

9. Imaging radar system (10) as claimed in claim 8, comprising a signal generation unit (18, 20, 22) operatively connected to said transmission antenna elements (14) and a signal reception unit (26, 28, 30) operatively connected to said reception antenna elements (16), an image computation unit (32) operatively connected to said signal reception unit (26, 28, 30) and a system control unit (24) operatively connected to said signal generation unit (18, 20, 22), said signal reception unit (26, 28, 30) and said image computation unit (32) to coordinate operation of said signal generation unit (18, 20, 22), said signal reception unit (26, 28, 30) and said image computation unit (32).

10. The imaging radar system (10) as claimed in claim 9, wherein said signal generation unit comprises an ultra-wideband signal generator (18) and a switching circuit (20), said switching circuit (20) being configured to alternately switch said signal generator (18) to said transmission antenna elements (12) under a control of said system control unit (24).

11. The imaging radar system as claimed in claim 9 or 10, wherein said signal reception unit comprises an ultra-wideband signal receiver (28) and a switching circuit (26), the switching circuit (26) of said signal reception unit being configured to alternately switch said signal receiver (28) to said reception antenna elements (16) under a control of said system control unit (24).

12. The imaging radar system (10) as claimed in any one of claims 9 to 11, wherein said image computation unit (32) is configured to compute a radar image from signal contributions obtained for various pairs of a transmission antenna element (14) and a reception antenna element (16).

13. The imaging radar system (10) as claimed in claim 12, wherein said image computation unit (32) is configured to compute a radar image from signal contributions obtained for all possible pairs of a transmission antenna element (14) and a reception antenna element (16).

14. The imaging radar system as claimed in any one of claims 9 to 13, comprising a display unit (34), such as e.g. a computer screen, operatively connected to said image computation unit (32).

**Fig. 1**

**Fig. 2**

## Fig. 3

## Fig. 10 (Comparative Example)

# Fig. 4

(a)

(b)

(c)

(d)

**Fig. 5**

(a)

(b)

(c)

(d)

**Fig. 6**

(a)

(b)

(c)

(d)

**Fig. 7**

(a)

(b)

(c)

(d)

**Fig. 8**

Topology I – Far Field Pattern Single-Range Horizontal Cut

**Fig. 9**

Topology I – Far Field Pattern Single-Range Vertical Cut

## Fig. 11 (Comparative Example)

(a)

(b)

(c)

(d)

# Fig. 12 (Comparative Example)

(a)

(b)

(c)

(d)

**Fig. 13**

Topology I – Far Field Pattern Single–Range Horizontal Cut

Legend:
— Reference Topology
– – – Freq Scaling Factor: 50%
⋯⋯ Freq Scaling Factor: 75%
–·–· Freq Scaling Factor: 125%
▼▼▼ Freq Scaling Factor: 150%

Azimuth Angle (deg)

Relative Gain (dB)

**Fig. 14**

Topology I – Far Field Pattern Single–Range Vertical Cut

Legend:
— Reference Topology
– – – Freq Scaling Factor: 50%
⋯⋯ Freq Scaling Factor: 75%
–·–· Freq Scaling Factor: 125%
▼▼▼ Freq Scaling Factor: 150%

Elevation Angle (deg)

Relative Gain (dB)

Europäisches
Patentamt

European
Patent Office

Office européen
des brevets

# EUROPEAN SEARCH REPORT

Application Number

EP 09 17 3986

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 6 525 697 B1 (THEOBOLD DAVID [US]) 25 February 2003 (2003-02-25) * column 4, line 34 - column 5, line 40; figure 2 * | 1-14 | INV. H01Q21/06 H01Q21/20 H01Q21/22 |
| A | US 6 842 157 B2 (PHELAN HARRY RICHARD [US] ET AL) 11 January 2005 (2005-01-11) * column 6, line 42 - column 9, line 21; figures 3,4, 9 * | 1-14 | |
| A | JP 07 131239 A (HITACHI LTD) 19 May 1995 (1995-05-19) * paragraph [0062] - paragraph [0063]; figures 2, 6, 8; table 1 * | 1-14 | |
| A | KOZICK R J ET AL: "COARRAY SYNTHESIS WITH CIRCULAR AND ELLIPTICAL BOUNDARY ARRAYS" IEEE TRANSACTIONS ON IMAGE PROCESSING, IEEE SERVICE CENTER, PISCATAWAY, NJ, US, vol. 1, no. 3, 1 July 1992 (1992-07-01), pages 391-405, XP000367716 ISSN: 1057-7149 * the whole document * | 1-14 | |
| A,D | US 2008/143587 A1 (JOHNSON DAVID ANTONY [GB]) 19 June 2008 (2008-06-19) * the whole document * | 1-14 | TECHNICAL FIELDS SEARCHED (IPC) H01Q |
| A,D | MARTINEZ-VAZQUEZ A ET AL: "UWB MIMO Radar Arrays for small Area Surveillance Applications" ANTENNAS AND PROPAGATION, 2007. EUCAP 2007. THE SECOND EUROPEAN CONFERENCE,, 11 November 2007 (2007-11-11), pages 1-6, XP009130646 * the whole document * | 1-14 | |

-/--

The present search report has been drawn up for all claims

| Place of search | Date of completion of the search | Examiner |
|---|---|---|
| Munich | 19 March 2010 | Rudolf, Hans |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

**Application Number**

EP 09 17 3986

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 07 288417 A (HITACHI LTD) 31 October 1995 (1995-10-31) * paragraph [0014] - paragraph [0023]; figures 4, 13; table 1 * ----- | 1-14 | |

**TECHNICAL FIELDS SEARCHED (IPC)**

The present search report has been drawn up for all claims

| Place of search | Date of completion of the search | Examiner |
|---|---|---|
| Munich | 19 March 2010 | Rudolf, Hans |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 09 17 3986

This annex lists the patent family members relating to the patent documents cited in the above-mentioned European search report.
The members are as contained in the European Patent Office EDP file on
The European Patent Office is in no way liable for these particulars which are merely given for the purpose of information.

19-03-2010

| Patent document cited in search report | | Publication date | Patent family member(s) | | Publication date |
|---|---|---|---|---|---|
| US 6525697 | B1 | 25-02-2003 | NONE | | |
| US 6842157 | B2 | 11-01-2005 | US | 2003076274 A1 | 24-04-2003 |
| | | | US | 6456244 B1 | 24-09-2002 |
| JP 7131239 | A | 19-05-1995 | JP | 3247520 B2 | 15-01-2002 |
| US 2008143587 | A1 | 19-06-2008 | EP | 1918734 A1 | 07-05-2008 |
| | | | GB | 2443456 A | 07-05-2008 |
| JP 7288417 | A | 31-10-1995 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080143587 A1

**Non-patent literature cited in the description**

- **A. Martinez-Vazquez ; J. Fortuny-Guasch.** UWB MIMO Radar Arrays for Small Area Surveillance Applications. *The Second European Conference on Antennas and Propagation,* 11 November 2007